**Europäisches Patentamt**

**European Patent Office**

**Office européen des brevets**

(11) Veröffentlichungsnummer: **0 114 936**
A2

# (12) EUROPÄISCHE PATENTANMELDUNG

(21) Anmeldenummer: **83110210.8**

(22) Anmeldetag: **13.10.83**

(51) Int. Cl.³: **G 01 D 11/24**
**G 12 B 9/02**

(30) Priorität: **08.11.82 DE 3241194**

(43) Veröffentlichungstag der Anmeldung:
**08.08.84 Patentblatt 84/32**

(84) Benannte Vertragsstaaten:
**DE FR GB NL SE**

(71) Anmelder: **VDO Adolf Schindling AG**
**Gräfstrasse 103**
**D-6000 Frankfurt/Main(DE)**

(72) Erfinder: **Höfert, Paul**
**Gerhard-Hauptmann-Ring 236a**
**D-6000 Frankfurt am Main(DE)**

(72) Erfinder: **Obst, Günther**
**Am Bruchrain 14**
**D-6395 Weilrod 3(DE)**

(74) Vertreter: **Könekamp, Herbert, Dipl.-Ing.**
**Sodener Strasse 9**
**D-6231 Schwalbach(DE)**

(54) Anzeigeinstrument.

㉗ Ein Anzeigeinstrument mit einem Gehäuse (1) besitzt einen Flansch (2), gegen den ein Ziffernblatt (3) und eine Deckscheibe (4) anliegen. Ein Frontring (6) umgreift die Deckscheibe (4), das Ziffernblatt (3) sowie den Flansch (2) und ist auf der gegenüberliegenden Seite des Flansches (2) mit einem Klemmring (5) durch eine Schnappverbindung (8) verbunden. Durch diese Gestaltung ist die Montage der Deckscheibe (4) und des Ziffernblattes (3) überaus einfach ohne eine spezielle Maschine durchzuführen.

Fig 1.

EP 0 114 936 A2

0114936

VDO Adolf Schindling AG     - 1 -     6ooo Frankfurt/Main 9o
Gräfstraße 1o3

G-S US-do
168O
3. November 1982

## Anzeigeinstrument

Die Erfindung bezieht sich auf ein Anzeigeinstrument mit einem Gehäuse, welches zur Vorderseite hin einen Flansch aufweist, gegen den mittels eines Frontringes eine durchsichtige Deckscheibe und/oder ein Zifferblatt gehalten ist. Solche Anzeigeinstrumente sind zum Beispiel in Kraftfahrzeugen angeordnet und allgemein bekannt. Sie werden üblicherweise in einer Öffnung einer Einbauplatte mittels eines rückseitigen Bügels gehalten.

Bei den bekannten Anzeigeinstrumenten ist die Deckscheibe mittels eines Metallringes gegen den Flansch des Gehäuses dadurch gehalten, daß der Metallring durch Umbördeln diesen Flansch und die Deckscheibe U-förmig umgreift. Das Erzeugen der beiden erforderlichen Umbördelungen ist ein relativ zeitaufwendiger Arbeitsgang und bedingt eine hierzu speziell ausgebildete Maschine.

Der Erfindung liegt die Aufgabe zugrunde, ein Anzeigeinstrument der eingangs genannten Art zu entwickeln, welches durch eine rasche und einfache Montagemöglichkeit seiner Deckscheibe und/oder seines Ziffernblattes billig herstellbar ist.

Diese Aufgabe wird erfindungsgemäß dadurch gelöst, daß gegen die Rückseite des Flansches ein auf das Gehäuse von der Gehäuserückseite her aufgeschobener Klemmring anliegt, auf den der Frontring mittels einer Schnappverbindung axial gehalten ist.

Der Hauptvorteil der Erfindung liegt darin, daß die Deckscheibe und/oder das Ziffernblatt mittels der Schnappverbindung ohne jedes Werkzeug am Flansch des Gehäuses des Anzeigeinstrumentes befestigt werden können. Dadurch ist die Montage des Anzeigeinstrumentes rascher als bisher durchführbar und verlangt kein besonderes Geschick und keine hohe Sorgfalt. Wenn der Frontring in den Klemmring einschnappt, dann ist zwangsläufig sichergestellt, daß der Frontring die Deckscheibe und/oder das Ziffernblatt zuverlässig gegen den Flansch des Gehäuses hält.

Eine vorteilhafte Ausgestaltung der Erfindung besteht darin, daß der Klemmring auf seiner Außenmantelfläche mehrere Rastnasen, und der Frontring entsprechende über die Rastnasen greifende Rastvertiefungen hat. Diese Ausgestaltung ist fertigungstechnisch besonders dann günstig, wenn der Frontring und der Klemmring aus Kunststoff bestehen und im Spritzgußverfahren hergestellt werden. Die Rastvorsprünge und Rastnasen können so gestaltet sein, daß keine Probleme bei der Entnahme der Teile aus der Spritzgußform entstehen.

Wenn aus der Außenmantelfläche des Klemmringes mehrere Zentriervorsprünge in entsprechende axiale Nuten der Innenmantelfläche des Frontringes ragen, dann wird auf einfache Weise erreicht, daß die Rastnasen zwangsläufig von den Rastvorsprüngen voll überdeckt werden, so daß eine sichere

Verrastung eintritt.

Von Vorteil ist es auch, wenn zwischen dem Frontring und
der Deckscheibe eine axiale Toleranzen ausgleichende
elastische Rundschnurdichtung vorgesehen ist. Diese
elastische Rundschnurdichtung vermag neben ihrer Dichtfunktion auch die Funktion eines Längenausgleiches auszuüben, so daß die erfindungsgemäß gestalteten Bauteile mit
relativ groben Toleranzen gefertigt werden können, ohne daß
die Gefahr besteht, daß der Frontring nicht mehr auf den
Klemmring zu verrasten vermag oder daß die Deckscheibe
nicht hinreichend fest auf den Flansch des Gehäuses gepreßt wird.

Die im Anspruch 5 angegebene Ausführungsform der Erfindung
ist vor allem dann zweckmäßig, wenn für verschiedene Einsatzfälle identische Anzeigeinstrumente verschieden weit
aus der Einbauplatte ragen sollen oder wenn für ansonsten
identische Anzeigeinstrumente unterschiedlich dicke Deckscheiben zum Einsatz kommen. Der Frontring braucht bei
dieser Ausgestaltung in solchen Fällen nicht verändert zu
werden. Man kann entweder den Klemmring auf die erforderliche Höhe abdrehen oder von vorneherein einen schmalen
Klemmring vorsehen, gegen den fallweise Distanzringe geschoben werden, die gegen die Einbauplatte und der Anlagefläche des Klemmringes anliegen. Abgesehen von der Möglichkeit einer einfachen Anpassung an verschiedene räumliche Gegebenheiten ist bei dieser Ausführungsform auch
sichergestellt, daß bei Befestigung der Anzeigeeinheit
in der Einbauplatte keine Kräfte in die Schnappverbindung
gelangen, wodurch die Rastnasen oder Rastvertiefungen beschädigt oder zerstört werden könnten.

Die Erfindung läßt zahlreiche Ausführungsmöglichkeiten zu.
Eine davon ist in der Zeichnung dargestellt und wird nachfolgend beschrieben. Es zeigen

Figur 1     einen Schnitt durch ein erfindungsgemäß gestaltetes Anzeigeinstrument im Bereich der Verrastung zwischen einem Frontring und einem Klemmring des Anzeigeinstrumentes,

Figur 2     den vollständigen Klemmring nach Figur 1 teilweise in Seitenansicht, teilweise im Querschnitt dargestellt,

Figur 3     eine Draufsicht auf den Klemmring gemäß Figur 2,

Figur 4     einen stark vergrößerten Bereich des Klemmringes im Bereich einer Klemmnase,

Figur 5     einen vollständigen Frontring nach Figur 1, teilweise in Seitenansicht, teilweise im Schnitt dargestellt,

Figur 6     eine Draufsicht auf den Frontring gemäß Figur 5, teilweise im Schnitt dargestellt.

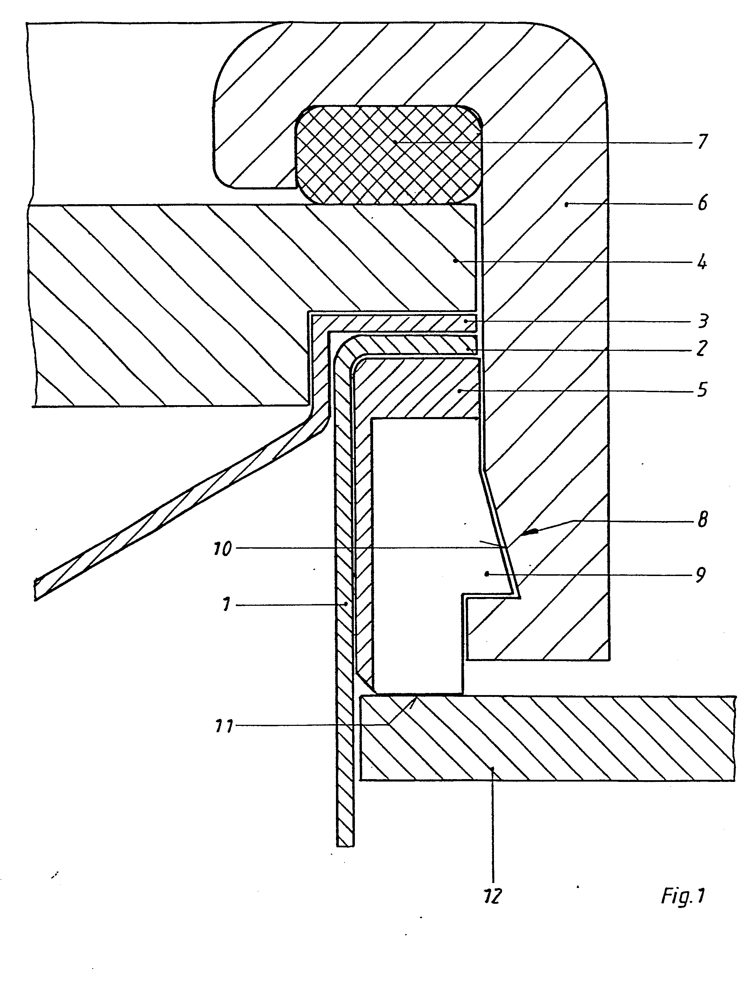

Die Figur 1 zeigt den vorderen Teil eines Gehäuses 1 eines Anzeigeinstrumentes. Dieses Gehäuse 1 weist auf seiner Vorderseite her einen Flansch 2 auf, auf den in der Zeichnung gesehen von oben her zunächst ein Ziffernblatt 3 und darauf eine Deckscheibe 4 aus beispielsweise Glas anliegt. Unterhalb des Flansches 2 befindet sich ein Klemmring 5.

Ein Frontring 6 umgreift die Deckscheibe 4, das Ziffernblatt 3 und den Flansch 2 sowie den Klemmring 5 und schließt dabei eine elastische Rundschnurdichtung 7 ein, die auf der Perpherie der Deckscheibe 4 aufliegt. Der Frontring 6 und der Klemmring 5 sind durch eine Schnappverbindung 8 zusammengehalten. Die Schnappverbindung 8 ist dadurch gebildet, daß am Klemmring 5 mehrere radial nach außen ragende sägezahnförmige Rastnasen 9 vorgesehen sind, deren flachere Flanke zum Flensch 2 hin verläuft. Im Frontring 6 sind den Rastnasen 9 entsprechende Rastvertiefungen 1o vorhanden.

Die Figur 1 läßt weiterhin erkennen, daß der Klemmring 5 über die Breite des Frontringes 6 in der Zeichnung gesehen nach unten reicht und mit einer Anlagefläche 11 gegen eine Einbauplatte 12 anliegt. Nicht dargestellt ist ein Spannbügel, durch den auf übliche Weise das Gehäuse 1 in der Zeichnung gesehen nach unten gezogen wird, so daß die Anlagefläche 11 fest gegen die Einbauplatte 12 gehalten ist und das Gehäuse 1 dadurch fest in der Einbauplatte 12 sitzt, ohne daß zusätzliche Kräfte in die Schnappverbindung 8 gelangen können.

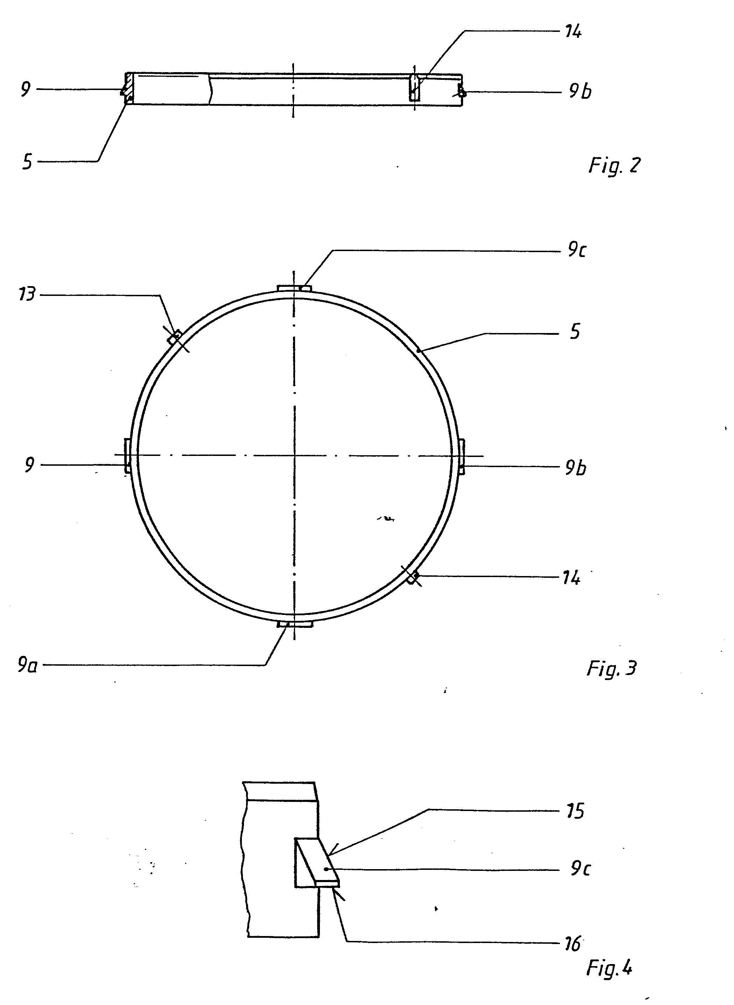

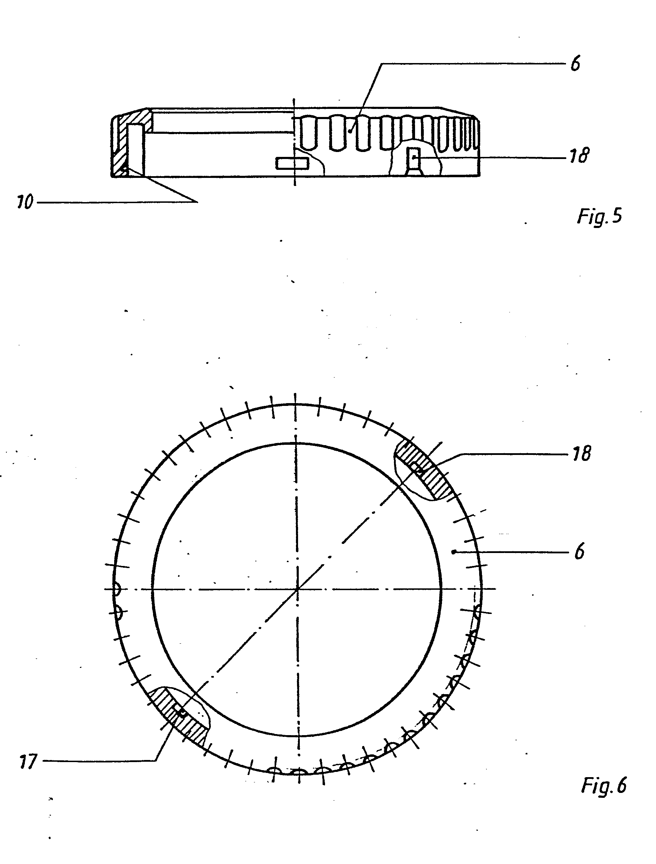

Die Figuren 2 und 3 zeigen, daß der Klemmring 5 insgesamt vier Rastnasen 9, 9a, 9b, 9c hat. Zusätzlich zu diesen Rastnasen 9 sind in der Außenmantelfläche des Klemmringes 5 zwei Zentriervorsprünge 13, 14 vorgesehen, deren Bedeutung später anhand der Figuren 5 und 6 erläutert wird.

Figur 4 läßt erkennen, daß die Rastnasen nach oben hin flache Flanken 15 und nach unten hin im rechten Winekl zur Mantelfläche des Frontringes 6 verlaufende Flanken 16 haben. Durch diese Gestaltung ist der Frontring 6 nach dem Einschnappen der Schnappverbindung 8 nicht mehr vom Klemmring 5 zu lösen. Selbstverständlich ist es jedoch auch möglich, die Schnappverbindung 8 so auszubilden, daß durch Zug am Frontring 6 ein Entrasten stattfinden kann.

Die Figur 5 zeigt im linken Bildteil eine der Rastvertiefungen 1o im Schnitt und im mittleren Bildteil einen
Blick von außen auf eine der drei anderen Rastvertiefungen.
Die Figur 6 läßt zwei diametral in der unteren Innenmantelfläche des Frontringes 6 von unten her hineinführende Nuten
17, 18 erkennen, wobei die Nut 18 auch in Figur 5 dargestellt wurde. Diese Nuten 17, 18 sind so bemessen, daß sie
die Zentriervorsprünge 13, 14 aufzunehmen vermögen.

Zum Aufschieben des Frontringes 16 auf den Klemmring 5 muß
der Frontring sich in einer solchen Winkelstellung zum
Klemmring 5 befinden, daß die Zentriervorsprünge 13, 14
in die Nuten 17, 18 gelangen können. In dieser Stellung
vermögen die Rastnasen 9 exakt in die Rastvertiefungen 1o
des Frontringes 6 zu schnappen.

VDO Adolf Schindling AG — 1 —

6ooo Frankfurt/Main 9o
Gräfstraße 1o3

G-S US-do
168D
3. November 1982

Patentansprüche

1. Anzeigeinstrument mit einem Gehäuse, welches zur Vorderseite hin einen Flansch aufweist, gegen den mittels eines Frontringes eine durchsichtige Deckscheibe und/oder ein.Ziffernblatt gehalten ist, dadurch gekennzeichnet, daß gegen die Rückseite des Flansches (2) ein auf das Gehäuse (1) von der Gehäuserückseite her aufgeschobener Klemmring (5) anliegt, auf den der Frontring (6) mittels einer Schnappverbindung (8) axial gehalten ist.

2. Anzeigeinstrument nach Anspruch 1, dadurch gekennzeichnet, daß der Klemmring (5) auf seiner Außenmantelfläche mehrere Rastnasen (9) und der Frontring (6) entsprechende über die Rastnasen (9) greifende Rastvertiefungen (1o) hat.

3. Anzeigeinstrument nach Anspruch 1 oder einem der folgenden, dadurch gekennzeichnet, daß aus der Außenmantelfläche des Klemmringes (5) mehrere Zentriervorsprünge (13, 14) in entsprechende axiale Nuten (17, 18) der Innenmantelfläche des Frontringe (6) ragen.

4. Anzeigeinstrument nach Anspruch 1 oder einem der folgenden, dadurch gekennzeichnet, daß zwischen dem Frontring (6) und der Deckscheibe (4) eine axiale Toleranzen ausgleichende, elastische Rundschnurdichtung (7) vorgesehen ist.

5. Anzeigeinstrument nach Anspruch 1 oder einem der folgenden, dadurch gekennzeichnet, daß der Klemmring (5) axial über die Breite des Frontringes (6) hinausragt und mit einer dem Flansch (2) abgewandten Seite eine Anlagefläche (11) zur axialen Fixierung des Anzeigeinstrumentes bildet.

Fig.1

Fig. 2

Fig. 3

Fig. 4

6

18

10

*Fig. 5*

18

6

17

*Fig. 6*